# EUROPEAN PATENT APPLICATION

(11) **EP 2 518 329 A2**
(43) Date of publication of application: **31.10.2012**
(21) Application number: 12002673.7
(22) Date of filing: 17.04.2012
(51) Int. Cl.: F15B 1/14

(54) **Broad pressure and frequency range accumulator**

(30) Priority: 25.04.2011 US 201113093701
(71) Applicant: Resonance Technology International Inc., Coquitlam, BC V3K 7B5 (CA)
(72) Inventor: Janes, Matthew C., Coquitlam, British Columbia V3K 7B5 (CA); Vansickle, Bradley E., Coquitlam, British Columbia V3K 7B5 (CA); Reelie, Douglas D., Coquitlam, British Columbia V3K 7B5 (CA); Page, Stewart G., Uraidla South Australia 5142 (AU)
(74) Representative: Bosch, Matthias

(57) **Abstract**

A method and apparatus for reducing undesirable pressure fluctuations over predetermined pressure and frequency ranges in a working fluid system, facilitating maintenance of appropriate levels of stored energy in the fluid system. Embodiments may be employed within a fluid system to dampen pressure fluctuations over an adequately large pressure range, for example in a resonant vibratory system. In such systems, pressures vary dramatically depending on whether resonance is achieved. An apparatus comprises a pressure vessel having a self equilibrating flexible piston device (104). The piston separates a gas volume (115) from a fluid volume (120) exposed to the system flow. The piston translates within the pressure vessel to equilibrate the gas and fluid pressures. A flexible portion (108) of the piston deflects at high frequency and adequate volume to reduce undesirable pressure fluctuations. The flexible portion translates force via its outer periphery to a ring portion (106) which translates within the pressure vessel.

## Description

### FIELD OF THE INVENTION

The present invention pertains in general to hydraulic or fluid accumulators and in particular to a broad pressure and frequency range accumulator.

### BACKGROUND

Devices which are capable of removing undesirable pressure fluctuations in fluid, typically hydraulic, systems are used in a variety of forms. Common names of these devices are accumulators, suppressors and dampening devices. These devices may function to store energy so as to smooth pressure pulses and reduce transverse effects on system components, thereby extending the life of the fluid system. Conventional gas-charged accumulator devices include a component which separates the hydraulic working fluid from a compressible gas, such as a piston, diaphragm, or bladder which is able to deflect due to the rise in working fluid pressure, compressing the gas volume trapped behind. The compression of the gas volume then stores energy which is returned to the system when the working fluid pressure is reduced, thereby smoothing out the fluctuations in pressure.

Typically, accumulators are designed for a specified range of operating pressures. In a gas-charged accumulator, the compressible gas is pre-charged in the pressure vessel to a designated value. The gas pressure may be selected so that, at typical operating conditions, the dividing component is at the midpoint of its available range of displacement. For a diaphragm or bladder style accumulator this range can be quite limited. The diaphragm or bladder is typically fixed at a certain point and the gas pre-charge level is selected for the known conditions. If the operating pressure deviates from an acceptable range, the bladder or diaphragm may fail. The failure mechanism for this situation can be due to pressure rising above an acceptable range and over stressing the membrane, or decreasing to a level where the membrane can come in contact with hazardous components of the device causing damage.

In addition, to prevent extrusion of a diaphragm or bladder of an accumulator through the communication port with the hydraulic system, a plate may be built into the diaphragm face or a valve may be used with a bladder style accumulator. Both risk damage to the gas retention fabric at highly cyclic loading which is exacerbated at low operating pressures by beating of the plate against the orifice opening or repeated opening and closing of the valve.

Typical piston style accumulators are able to operate in a broader pressure range than diaphragm or bladder style accumulators. The travel of the piston in the cylinder offers an ability to compress and equilibrate the pre-charged gas over a greater span of operating pressures. However, the piston itself is typically substantially larger and more massive than a bladder or diaphragm. This can cause the piston to be inherently slow and unable to react to a high frequency pressure fluctuation. The limits of the piston's reaction time eliminate the effectiveness of the piston style accumulator for certain devices which operate in higher frequency domains.

In certain applications, hydraulic systems must operate within a large pressure range at high frequencies. An example of such a system is a resonant vibratory system which may be used, for example, to advance piles or drill rods and compact or crush soils. In these mechanisms, hydraulic power is used to vibrate an object at its natural frequency greatly improving the efficiency and effectiveness of the vibration. Typical natural frequencies of the components being used in this type of application range from 50 to 250 Hz.

Most conventional accumulators are generally configured to address intermittent or occasional large flow events. However, for resonant vibratory systems, pressure fluctuations may occur regularly or cyclically, with a need for a dampening effect on every cycle of the vibration. Therefore, an accumulator associated with such systems may be required to operate to store and release energy at substantially twice the maximum frequency of the resonant vibratory system, for example to deflect up to its full volume in both directions around the equilibrated operating point. At these frequencies the mass of a conventional piston style accumulator may make it too slow to effectively reduce the pressure fluctuations in the system.

Another characteristic of resonant vibratory systems is that the devices will operate at resonance and may also operate off-resonance. For example, when operating in different conditions or in order to obtain resonance, a certain amount of time may be required in which these devices are running off-resonance. During these conditions the system may be required to provide significantly more energy compared to operation in the resonant condition. Due to the increase in demand on the system when in off-resonance operation, the pressure of the hydraulic fluid may be greatly increased compared to the pressure when operating at resonance. Conventional bladder or diaphragm style accumulators may not be appropriate for dealing with such large pressure ranges. For example, the gas pre-charge level may not be sufficiently adjustable in such accumulators to offer a large enough range for safe deflection of the membrane, which may thus lead to membrane failure.

Resonant vibratory systems thus exhibit a combination of high frequency working fluid pressure fluctuations and a wide range of pressure conditions, for example due to the requirement to operate in both resonant and non-resonant modes. Similar conditions may also occur in other hydraulic systems or equipment. With no accumulator, excess pressure fluctuations in working fluid may cause damage to many parts of these vibrators such as seals, ports, pumps etc.

Current state of the art is represented by the following publications, incorporated herein by reference in their entirety: U.S. Patent No. 4,307,753; U.S. Patent No. 3,028,881; U.S. Patent No. 3,741,692; U.S. Patent No. 4,838,316; and U.S. Patent No. 3,474,830.

U.S. Patent No. 4,307,753 discloses a wide frequency pulsation dampener device comprising a cylindrical pressure vessel and a piston member shiftable axially therein, the piston member incorporating a deflectable diaphragm disposed within a permeable cage. However, this device leaves evident failure mechanisms which would prevent sustained life of the deflectable diaphragm. Notably, the cage assembly which is stated to be in "lining relation" with the diaphragm implies that under normal operation the diaphragm will be in contact with the caged assembly. Thus, the nature of the device results, under normal operating conditions, in repeated and cyclical contact made between the fragile diaphragm and caged assembly quickly causing damage to the diaphragm and eventual failure. In addition, use of materials such as Teflon^{™} for the flexible diaphragm, as taught by U.S. Patent No. 4,307,753, may not provide for adequate performance of the pulsation dampener device in some applications.

Therefore there is a need for a broad pressure and frequency range accumulator that is not subject to one or more limitations of the prior art.

This background information is provided for the purpose of making known information believed by the applicant to be of possible relevance to the present invention. No admission is necessarily intended, nor should be construed, that any of the preceding information constitutes prior art against the present invention.

### SUMMARY OF THE INVENTION

An object of the present invention is to provide a broad pressure and frequency range accumulator, for example a gas-charged hydraulic accumulator. In accordance with an aspect of the present invention, there is provided an accumulator apparatus comprising: a pressure vessel having inner walls defining an elongated cavity, the pressure vessel comprising a communication port in fluid communication with a first portion of the elongated cavity, the pressure vessel further comprising an energy storage and return portion associated with a second portion of the elongated cavity; and a piston assembly located within the elongated cavity and configured to separate the elongated cavity into the first portion and the second portion, the piston assembly comprising: a diaphragm; and a ring portion operatively coupled to the diaphragm at an outer periphery of the diaphragm, the ring portion movably and sealingly engaged with said inner walls; wherein the diaphragm is configured to deform under a pressure differential between the cavity first portion and the cavity second portion, thereby developing a tensile force within the diaphragm, the outer periphery of the diaphragm configured to transfer a force representative of the tensile force into the ring portion, the ring portion configured to move within the elongated cavity at least in part in response to said force.

In accordance with another aspect of the present invention, there is provided a resonant vibratory system comprising: a working fluid system comprising one or more conduits, the working fluid system configured to contain hydraulic fluid, the working fluid system comprising an accumulator coupling location; a power source operatively coupled to the working fluid system and configured to drive said hydraulic fluid in the working system; a power delivery system operatively coupled to the working fluid system and configured to deliver resonant vibratory power to a load; and an accumulator apparatus comprising: a pressure vessel having inner walls defining an elongated cavity, the pressure vessel comprising a communication port in fluid communication with a first portion of the elongated cavity, the communication port operatively coupled to the working fluid system at the accumulator coupling location, the pressure vessel further comprising an energy storage and return portion associated with a second portion of the elongated cavity; and a piston assembly located within the elongated cavity and configured to separate the elongated cavity into the first portion and the second portion, the piston assembly comprising: a diaphragm; and a ring portion operatively coupled to the diaphragm at an outer periphery of the diaphragm, the ring portion movably and sealingly engaged with said inner walls; wherein the diaphragm is configured to deform under a pressure differential between the cavity first portion and the cavity second portion, thereby developing a tensile force within the diaphragm, the outer periphery of the diaphragm configured to transfer a force representative of the tensile force into the ring portion, the ring portion configured to move within the elongated cavity at least in part in response to said force.

In accordance with another aspect of the present invention, there is provided a method for providing an accumulator apparatus, the method comprising: providing a pressure vessel having inner walls defining an elongated cavity, the pressure vessel comprising a communication port in fluid communication with a first portion of the elongated cavity, the pressure vessel further comprising an energy storage and return portion associated with a second portion of the elongated cavity; and providing a piston assembly comprising: a diaphragm; and a ring portion operatively coupled to the diaphragm at an outer periphery of the diaphragm, the ring portion movably and sealingly engaged with said inner walls; and locating the piston assembly located within the elongated cavity, thereby separating the elongated cavity into the first portion and the second portion; wherein the diaphragm is configured to deform under a pressure differential between the cavity first portion and the cavity second portion, thereby developing a tensile force within the diaphragm, the outer periphery of the diaphragm configured to transfer a force representative of the tensile force into the ring portion, the ring portion configured to move within the elongated cavity at least in part in response to said force.

### BRIEF DESCRIPTION OF THE FIGURES

These and other features of the invention will become more apparent in the following detailed description in which reference is made to the appended drawings.

Figs. 1A to 1E illustrate cross-sectional schematic views of an accumulator comprising a piston assembly having an elastic diaphragm, for various configurations of the piston assembly, in accordance with embodiments of the present invention.

Fig. 2 illustrates a cross-sectional schematic view of an accumulator comprising a piston assembly having an inelastic diaphragm or partially elastic diaphragm, in accordance with embodiments of the present invention.

Fig. 3 is a front view of an accumulator assembly showing the cylinder and charge port on top, in accordance with embodiments of the invention.

Fig. 4 is a section view taken from line A-A of Fig. 3, showing the accumulator assembly including cylinder, end caps, charge plate and flexible piston assembly, in accordance with embodiments of the invention.

Fig. 5 is a detailed view taken from detail B of Fig. 4, showing the flexible piston assembly including the massive piston shell and deflectable inserted membrane, in accordance with embodiments of the invention. Fig. 5 also illustrates trapping of the diaphragm and the sealing system used to separate fluid from gas and allow for concentric travel of the piston.

Fig. 6 is a detailed view taken from detail C of Fig. 4, showing the charge plate and communication port with the hydraulic system, in accordance with embodiments of the invention.

### DETAILED DESCRIPTION OF THE INVENTION

### Definitions

The term "resonant vibratory system" refers to a system in which vibrational energy is delivered from a source to a load with the goal of inducing a resonant vibration in the load thereby achieving a desired effect. The source may be a hydraulic power supply, and the vibrational energy delivered via a hydraulic system or other working fluid system, comprising pipes, conduits, or the like. Resonant vibratory systems may be used for example in pile driving, drilling or soil compaction, where the load may include a portion of ground or soil and/or a portion of a pile or drill bit to be inserted therein. Embodiments of hydraulic accumulators as described herein may be usefully applied in resonant vibratory systems. However, hydraulic accumulators as described herein are not limited to application in resonant vibratory systems, and may be usefully applied in other systems, hydraulic equipment, and the like.

Unless defined otherwise, all technical and scientific terms used herein have the same meaning as commonly understood by one of ordinary skill in the art to which this invention belongs.

An aspect of the present invention provides for an accumulator, such as a hydraulic accumulator, comprising a pressure vessel and a piston assembly movable therein. The pressure vessel has inner walls defining an elongated cavity, such as a cylindrical bore. The pressure vessel comprises a communication port in fluid communication with a first portion of the elongated cavity. The communication port is configured for connection of the accumulator apparatus to a working fluid system, such as a working fluid system of an article of hydraulic equipment, a resonant vibratory system, or the like. The pressure vessel further comprises an energy storage and return portion associated with a second portion of the elongated cavity. The energy storage and return system may comprise a sealed volume of compressible gas, such as Nitrogen or other appropriate gas, along with means to charge, discharge and/or monitor the volume of compressible gas, such as an end cap with a gas valve system.

The piston assembly is located within the elongated cavity and configured to separate the elongated cavity into the first portion and the second portion. The first portion and the second portion are adjustable in volume by action of the piston assembly, but are substantially separated so that fluid in one portion does not mix with fluid in the other portion. The piston assembly comprises a diaphragm and a ring portion operatively coupled to the diaphragm at an outer periphery of the diaphragm. The ring portion is movably and sealingly engaged with the inner walls of the pressure vessel, thereby providing for a movable piston within the pressure vessel. The ring portion is shaped appropriately to engage the elongated cavity, and is configured to hold the diaphragm within an inner aperture, the diaphragm exposed to the first and second portions of the elongated cavity. The ring portion may comprise a bushing or other bearing component for engaging the inner aperture. The ring portion may comprise a flexible seal for sealing a space between the ring portion and the elongated cavity. The diaphragm is configured to elastically and/or inelastically deform under a pressure differential between the first portion and the second portion, thereby developing a tensile force within the diaphragm. The outer periphery of the diaphragm is configured to transfer a force representative of the tensile force into the ring portion. The ring portion configured to move within the elongated cavity at least in part in response to said force. In some embodiments, the diaphragm is configured to elastically deform under pressure differential. In some embodiments, the diaphragm is configured to inelastically and flexibly deform under pressure differential.

As it occupies a portion of the elongated cavity, the ring portion may experience a direct force due to a pressure differential between the first portion and the second portion. The ring portion may thus move within the elongated cavity in response to both the force transferred from the diaphragm and the direct force on the ring portion. In some embodiments, the ring portion may be configured with respect to its surface area and/or shape, so as to produce a desired relationship between the pressure differential and the direct force experienced by the ring portion. For example, if the cross-sectional area of the elongated cavity occupied by the ring portion is increased, the direct force applied to the ring portion due to a given pressure differential may also be increased.

In embodiments of the present invention, force transfer between the diaphragm and the ring portion occurs substantially only through the operative coupling around the diaphragm outer periphery, for example at locations where the diaphragm is clamped to the ring portion via a ring clamp or other means. The diaphragm is therefore substantially freely movable within the elongated cavity whenever the ring portion is located away from the elongated cavity ends, for example as may be the case during normal operating conditions of the accumulator. This arrangement may facilitate an increased lifetime of the diaphragm since contact between the diaphragm inner portion and other objects within the elongated cavity is avoided where practicable.

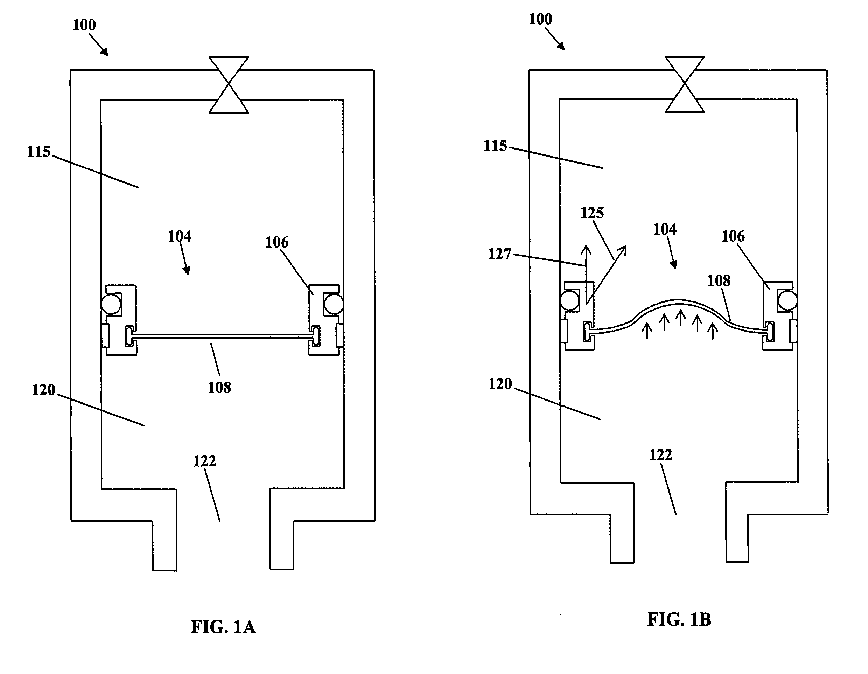

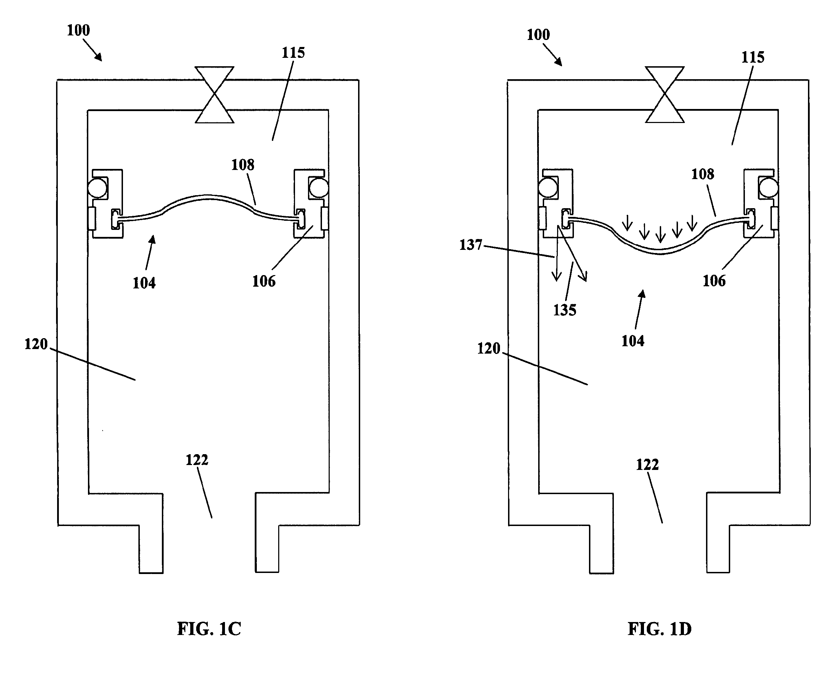

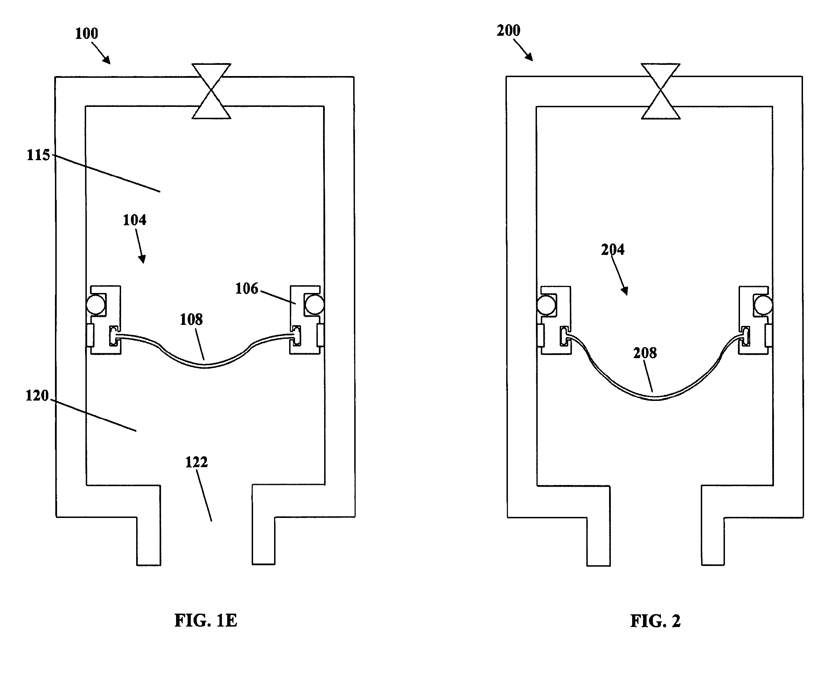

Operation of the accumulator in accordance with embodiments of the invention is described, with reference to Figs. 1A, 1B, 1C, 1D and 1E as follows. Fig. 1A illustrates a cross-sectional view of an accumulator apparatus 100 having a piston assembly 104 located within a cylindrical cavity and dividing the cavity into a first portion 120 and a second portion 115. The first portion 120 is configured for fluid communication with a working fluid system via a communication port 122. The second portion 115 is sealed and contains a predetermined amount of compressible gas. The piston assembly 104 comprises a ring portion 106 and a diaphragm 108, which in the current embodiment comprises an elastically deformable material. The diaphragm 108 flexes and the ring portion 106 translates within the cavity in response to pressure differentials between the first and second portions 120 and 115, respectively. The piston assembly 104 therefore tends to adjust to equalize pressure differentials between the first and second portions of the cavity. It is noted that pressure in the second portion 115 is substantially inversely proportional to the volume of the second portion 115. Pressure in the first portion 120 is generally decreasing or at least nonincreasing with increasing volume of the first portion 120, the exact relationship depending in part on conditions of the rest of the working fluid system operatively coupled to the accumulator via the communication port 122. Fig. 1A illustrates a particular condition in which the ring portion 106 is located substantially midway within the cylindrical cavity, and the diaphragm 108 is substantially flat. Starting from this state, an increase in pressure in the first portion 120 may cause the diaphragm 108 to deform away from the first portion 120, as illustrated in Fig. 1B. The gas in the second portion 115 is compressed by this action, thereby storing energy. The diaphragm may also store and release energy by elastic action thereof. However, in embodiments of the invention, the amount of energy stored and released by elastic action is small compared to the amount stored and released by the compressed gas.

As illustrated in Figs. 1B, 1C, 1D, 1E, the diaphragm may elastically deform into a dome shape, with a surface area and curvature depending at least in part on the pressure differential and other factors such as motion of the ring portion. It is contemplated that the diaphragm may also attain other curved shapes, for example due to high-frequency pressure fluctuations. For example, a circular, elastic diaphragm may exhibit different vibrational modes of a circular membrane from the (0,1) mode onward, as would be readily understood by a worker skilled in the art.

A tensile force may be induced in the elastic diaphragm 108 due to its deformation and/or due to the pressure differential between second portion 115 and first portion 120 of the cylindrical cavity. A force 125, representative of this tensile force, is also transferred to the ring portion 106 by virtue of its operative coupling to the diaphragm 108. This force 125 has a component 127 parallel to the main axis 102 of the cylindrical cavity. If this component 127 of the force 125 is sufficiently high in magnitude for a sufficient period of time, the ring portion will tend to translate within the cylindrical cavity by a corresponding amount and in the same direction as this component of the force. Travel of the ring portion may also depend on other factors, such as a direct force applied to the ring portion due to the pressure differential. Fig. 1C illustrates the accumulator apparatus 100 after the ring portion 106 has undergone translation due to the force 125. The gas in the second portion 115 is also compressed due to translation of the piston assembly 104, thereby storing energy. If the component 127 of the force 125 is insufficient to overcome forces such as friction, the diaphragm may remain in a deflected state such as illustrated in Fig. 1B for a period of time. If the pressure differential between the first and second portions 120 and 115, respectively, subsides within a predetermined amount of time, the diaphragm 108 may relax, and the accumulator apparatus may return to the state illustrated in Fig. 1A. If the pressure differential between the first and second portions 120 and 115, respectively, reverses within a predetermined amount of time, the accumulator apparatus may pass through the state illustrated in Fig. 1A and enter the state illustrated in Fig. 1E, wherein the diaphragm is deformed away from the second portion 115. It is further noted that, as the gas in the second portion 115 is compressed, the pressure differential between the first and second portions 120 and 115, respectively, may decrease, thereby decreasing tensile force in the diaphragm 108 and force 125 acting on the ring portion 106.

Fig. 1D illustrates the accumulator apparatus 100 wherein the ring portion 106 is in substantially the same position as in Fig. 1C, but the pressure in the second portion 115 of the cylindrical cavity is now greater than the pressure in the first portion 120. The diaphragm 108 is deformed away from the second portion 115, due to this pressure differential. If the diaphragm deflects from the configuration of Fig. 1C to the configuration of 1D, the gas in the second portion 115 correspondingly expands, thereby releasing energy. A tensile force may be induced in the elastic diaphragm 108 due to its deformation and/or due to the pressure differential between second portion 115 and first portion 120 of the cylindrical cavity. A force 135, representative of this tensile force, is also transferred to the ring portion 106. This force 135 has a component 137 parallel to the main axis 102 of the cylindrical cavity. If this component 137 of the force 135 is sufficiently high in magnitude for a sufficient period of time, the ring portion will tend to translate within the cylindrical cavity in the same direction as this component 137 of the force 135. As previously noted, the ring portion may also experience a direct force applied thereto due to the pressure differential, and generally in the same direction as the force 135, the direct force also tending to cause the ring portion to translate. Fig. 1E illustrates the accumulator apparatus 100 after the ring portion 106 has undergone translation due to the force 135. The gas in the second portion 115 also expands due to the translation of the piston assembly 104 from its position in Fig. 1D to its position in Fig. 1E, thereby releasing energy.

Fig. 2 illustrates an accumulator apparatus 200 comprising a piston assembly 204 having a flexible but inelastic diaphragm 208, in accordance with embodiments of the present invention. The diaphragm 208 has a predetermined and substantially fixed surface area, and hence is always in a curved state, for example a convex or concave, substantially dome-shaped state, or other more complex shape. An inelastic or otherwise slackened diaphragm may exhibit rapid deformation when exposed to a small pressure differential, since there is little or no elastic resistance of the diaphragm in its slackened state.

In some embodiments, an accumulator may include a diaphragm which is elastic, but which is configured such that, in its slackened state, the diaphragm surface area is greater than the minimum surface area required to cover the aperture defined by the ring portion. Such a diaphragm is not biased to flatten as in Fig. 1A, but is curved in its slackened state, similarly to Fig. 2. When the pressure differential increases beyond the threshold, tensile forces develop within the diaphragm and elastic deformation of the diaphragm and/or translation of the piston assembly may occur. Such a diaphragm is rapidly responsive to initial changes in pressure from equilibrium conditions, but is also elastically deformable, thereby facilitating a greater diaphragm operating range. Responsivity may substantially smoothly decrease once the slack in the diaphragm is taken up, due to elastic deformability of the diaphragm. Generally, in embodiments of the invention, the diaphragm stress/strain characteristics may be variable with respect to deformation of the diaphragm from a slackened state.
In embodiments of the present invention, the accumulator operates substantially concurrently as both a piston accumulator and a diaphragm accumulator. The accumulator may thereby exhibit desirable aspects of both accumulator types, for example operability in a range of pressures, operability with adequate speed for operability at the higher frequencies, operability over a range of volumes. The diaphragm is deflectable at high frequencies, thereby compressing and expanding a volume of gas held in the accumulator apparatus and hence storing and releasing up to a predetermined amount of energy with low latency. The piston translates at lower frequencies (higher latency), but with a larger potential range of compression or expansion of the volume of gas. An accumulator may thus be responsive to adequately high frequency cyclic pressure spikes and an adequately broad range of operating frequencies and pressures.

Furthermore, the movable piston provides for an adjustable operating point of the accumulator, with the diaphragm capable of rapid deflection about this operating point to store and release energy at high frequencies. For example, when pressure fluctuations are above a predetermined frequency, the piston assembly may remain substantially stationary within the elongated cavity while the diaphragm moves to absorb at least a portion of the high-frequency pressure fluctuations. The piston assembly may remain substantially stationary or move within a limited range and/or with limited responsivity due to factors such as its mass, inertia, frictional forces, and the like.

In some embodiments, the accumulator may thus dampen high-frequency pressure fluctuations in a variety of different operating conditions and pressure ranges, and the accumulator may automatically and smoothly adjust between these different operating conditions by translation of the piston assembly. Different operating conditions may result from changes in horsepower, work load, or loss of resonance in a resonant vibratory system. In some embodiments, the piston assembly translates back and forth within the pressure vessel elongated cavity substantially due to lower frequency pressure fluctuations, and the diaphragm flexes back and forth substantially due to higher frequency pressure fluctuations. Translational responsiveness may change discontinuously, for example due to differences between sliding and static friction.

Another aspect of the present invention provides for a resonant vibratory system comprising an accumulator as described herein. The resonant vibratory system comprises a power source, such as a hydraulic power pack, a working fluid system, such as comprises a system of conduits, and a power delivery system, such as an interface to a load surface such as soil, rock, or the like. The working fluid system comprises an accumulator coupling location which provides fluid communication with an accumulator via a communication port of the accumulator. The accumulator comprises a pressure vessel containing a piston assembly movable therein. The piston assembly comprises a diaphragm and a ring portion operatively coupled to the diaphragm at an outer periphery of the diaphragm, as described herein.

An accumulator as described herein may be adapted for use in resonant vibratory systems, for example comprising piston cylinder style resonant vibratory equipment. Such equipment may be particularly susceptible to damage sustained by pressure fluctuations, for example, due to the irregularity of mean operating pressures and cyclic characteristic of pressure fluctuations. Thus an adequate accumulator device as provided herein may be used to prevent equipment damage, and dampen the effects of pressure spikes to reduce their effect on components, thereby facilitating reliable, robust resonant vibratory equipment.

In certain systems such as resonant vibratory systems or other fluid or hydraulic systems, without an adequate accumulator installed, the water hammer effect, as would be readily understood by a worker skilled in the art, may introduce pressure spikes into the system. This effect is characteristic to fluid or hydraulic systems in general and resonant vibratory systems in particular. The full force of these pressure spikes may communicate to seals, bearings and other vulnerable components of or coupled to a working fluid system, potentially reducing component lifetime and causing failure. Use of an adequately designed accumulator as provided for in the present invention may prevent such failure, and may additionally or alternatively have other significant benefits, such as a reduction in noise and an increase in system efficiency.

Yet another aspect of the present invention provides for a method of providing an accumulator, for example including manufacturing, configuration, and/or installation. The method comprises providing a pressure vessel having inner walls defining an elongated cavity. The pressure vessel comprises a communication port in fluid communication with a first portion of the elongated cavity, and an energy storage and return portion associated with a second portion of the elongated cavity. The method further comprises providing a piston assembly comprising: a diaphragm; and a ring portion operatively coupled to the diaphragm at an outer periphery of the diaphragm. The ring portion is movably and sealingly engaged with said inner walls of the pressure vessel. The method further comprises locating the piston assembly located within the elongated cavity, thereby separating the elongated cavity into the first portion and the second portion. The diaphragm is configured to deform under a pressure differential between the cavity first portion and the cavity second portion, thereby developing a tensile force within the diaphragm. The outer periphery of the diaphragm is configured to transfer a force representative of the tensile force into the ring portion. The ring portion is configured to move within the elongated cavity at least in part in response to said force.

In accordance with embodiments of the present invention, there is provided an accumulator capable of accommodating rapid fluctuations in fluid flow to a predetermined volume, such fluctuations occurring for example up to a predetermined maximum frequency, for example 400 Hz, 1 kHz, 50 kHz, or other values, depending on the construction and dimensions of the accumulator. This may facilitate a reduction in pressure fluctuations that would otherwise accompany such fluctuations in fluid flow. As would be readily understood by a worker skilled in the art, pressure fluctuations and fluid flow fluctuations typically occur together in accordance with Bernoulli's principle. An accumulator may comprise a communication port and elongated cavity of sufficient flow capacity, cross-sectional area, and/or volumetric capacity to allow fluid to flow into and out of the accumulator at a predetermined rate. By adjusting the accumulator dimensions, for example the dimensions of the communication port, the rate of fluid flow can be correspondingly adjusted.
Accumulator performance may additionally or alternatively be specified, at least in part, in terms of a response time, such as 0.001 seconds, indicative of the time taken to absorb a pressure spike of the working fluid system, or to add pressure to the working fluid system in response to a pressure dip. In some embodiments, the response time may be indicative of the amount of time required for the accumulator to store or release up to a predetermined amount of energy in response to a change in pressure of the working fluid in the accumulator. In some cases, the response time may be indicative of the time required to substantially equilibriate working fluid pressure with charged gas pressure within the accumulator, when working fluid pressure changes by up to a predetermined amount. In embodiments of the present invention, larger pressure fluctuations may take more time to absorb than smaller pressure fluctuations. A nominal operating frequency of the accumulator may be inversely proportional to its response time.

In some embodiments, the geometry of the accumulator and/or the size of the communication port thereof, may be configured so that there is little or no choking or restriction of working fluid flow at adequately high flow rates. An accumulator may be dimensioned for adequate operation with a predetermined type of fluid system and/or equipment of a predetermined horsepower. For example, the communication port of the accumulator, and/or the accumulator cavity, may be configured, for example in aperture size and/or other dimensions, to allow for up to a predetermined volume of working fluid to move therethrough per unit time, referred to herein as the capacity flow rate. The capacity flow rate through the communication port may be configured to be at least an amount required for adequate dampening of fluctuations in a given working fluid system, for example. The capacity flow rate may be related to the dampening frequency response characteristics of the accumulator, as would be readily understood by a worker skilled in the art. Various sizes of accumulators, with various cross-sectional areas of the elongated cavities and communication ports, may be provided in accordance with embodiments of the present invention, configured having appropriate capacity flow rates and response times for use in various applications, as would be readily understood by a worker skilled in the art. This may allow for a reduced number of accumulators to be used in high flow rate conditions. A further advantage of this arrangement is that the accumulator may be placed proximal to the source of pressure fluctuations, or at another substantially optimal point in the working fluid system. Suppression of undesired pressure fluctuations may thus be addressed more effectively, since more suppression capacity can be brought to bear at a desired point, rather than distributed throughout the working fluid system.

An accumulator as described herein comprises an energy storage and return portion, configured to store and release adequate amounts of energy at adequate rates. Storage of energy may be provided in accordance with a variety of energy storage means, for example via a sealed volume of gas, as in a gas-charged accumulator, wherein a predetermined quantity of gas is stored in a volumetrically variable and substantially sealed container. Motion of the piston assembly compresses the gas to store energy, which may be subsequently returned when the working fluid pressure drops, thereby improving efficiency and/or power of the working fluid system. Other energy storage means may be used such as a spring, a weighted piston, or another compressible medium. The energy storage and return portion may also be viewed, in some embodiments, as comprising the piston assembly, which interacts with the volume of gas via diaphragm deflection and/or piston translation. The amount of compressed gas provided in an energy storage and return portion of the accumulator may be adjustable by gas pre-charging depending on an anticipated range of operating conditions. A compressed gas energy storage and return system may be implemented without additional mounting or assembly considerations other then an adequately serviceable sealed pressure vessel.

In accordance with embodiments of the present invention, the accumulator first portion is a fluid containing portion, configured to be in fluid communication with a working fluid system comprising hydraulic oil or other working fluid and separated from the energy storage and return portion by the piston assembly. The piston assembly is generally impermeable to fluid so as to impede fluid from flowing between the energy storage and return portion and the fluid containing portion. Various components of the piston assembly may be formed of a variety of materials such as metals, polymers, nitrile, and composites.

In embodiments of the present invention, the piston assembly is configured having a predetermined mass, the mass selected to contribute to desired performance characteristics of the accumulator. For example, a less massive piston assembly may translate in the elongated cavity more readily in response to pressure differentials within the accumulator than a more massive piston assembly, other considerations such as friction and orientation being equal. In some embodiments, less massive piston assemblies may thus be used to provide for an accumulator capable of absorbing larger pressure fluctuations in higher frequency ranges. In some embodiments, more massive piston assemblies may be used to provide for an accumulator capable of absorbing high-frequency pressure fluctuations about a wider range of operating points, since the piston assembly in this case may tend to be more stationary within the elongated cavity in this case, the mass of the piston assembly inhibiting it from translating in response to higher frequency components of pressure fluctuation.

In embodiments of the present invention, the diaphragm of the piston assembly is configured having a predetermined mass which is substantially less than the mass of the piston assembly as a whole. The diaphragm may thus be configured to respond more rapidly to pressure differentials and thus provide a high frequency response capability to the accumulator. Responsivity of the diaphragm may decrease as the diaphragm undergoes increased elastic deformation, due to tensile forces developed within the diaphragm. However, these same tensile forces may be transferred to the remainder of the piston assembly, resulting in movement of the piston and possibly managing or relieving build-up of tension in the diaphragm. Diaphragm materials such as nitrile or composite materials may be selected based at least in part on their mass properties.

In some embodiments, the diaphragm is configured with a predetermined deflection profile, for example customized for predetermined operational requirements in a system with predetermined characteristics. The diaphragm deflection profile can be adjusted by factors such as diaphragm surface area, two-dimensional and three-dimensional shape, overall thickness, variable thickness profile, and material composition. For example, the diaphragm may be configured with a predetermined three-dimensional shape when in its slackened position, and/or may be configured to elastically deform in accordance with a predetermined shape response profile under a pressure differential. A larger diameter generally corresponds to a greater capacity of the diaphragm, and of the accumulator as a whole, to store and release working high cyclic volume fluid and energy.

In some embodiments, the diaphragm may be substantially flat and elastically deformable, with an exterior lip to aid in assembly. In another embodiment, the diaphragm may have a domed or hemispherical shape, or other shape, such as a double-domed shape, which may be the shape of a substantially inelastic diaphragm or the shape of an elastic diaphragm when in a relaxed or slack state. These and other diaphragm geometries may be configured to facilitate improved volumetric capacity with lower diaphragm strain and/or faster response to pressure fluctuations from a pressure equilibrium between first and second cavity portions. A diaphragm of appropriate geometry may offer sufficient deflection without stretching the diaphragm itself. In some embodiments, the diaphragm may be configured for deflection in an elastically relaxed state, as well as elastic deformation and deflection beyond the elastically relaxed state.

In embodiments of the present invention, movement of the diaphragm within the elongated cavity of the pressure vessel is substantially unimpeded by proximate elements such as cages coupled to and travelling with the piston assembly. This may improve the life span of the diaphragm by decreasing the amount or frequency of contact with such components, which may be an important consideration in systems exhibiting high-frequency pressure fluctuations over extended periods. Further, by reducing the number of components operatively coupled to the piston assembly, such as travelling diaphragm cages, mass of the piston assembly is reduced, thereby changing responsiveness of the piston assembly. Slow piston response and high inertia could otherwise lead to higher amplitudes of diaphragm deflections, which may in some cases result in straining the diaphragm at levels approaching or exceeding operating tolerances. Alternatively, mass may be added to the piston assembly as desired, for example by forming the ring portion of a denser material, or adding weights thereto, or the like.

Embodiments of the present invention comprise a charge plate located in the cavity of the pressure vessel, for example adjacent to the communication port thereof. The charge plate is configured to allow fluid transfer, for example through perforations thereof, while limiting motion of the diaphragm when the piston assembly is proximate to the communication port, for example to inhibit extrusion of the diaphragm through the communication port. When working fluid pressure is less than pressure of the charged gas in the accumulator, for example when the machine associated with the working fluid system is in an OFF state, the charged gas pressure may cause the piston assembly to move toward the communication port, and further to deform the diaphragm toward the communication port. If the diaphragm comprises a sufficiently elastic material, the pressure differential may tend to press the diaphragm against or even into the communication port. Without a sufficient impediment, such as a charge plate, this situation may undesirably affect the working fluid system and possibly damage the diaphragm. Appropriate tuning of the system pre-load gas pressure, tuning of the accumulator charged gas pressure, geometry of the communication port, or a combination thereof, may also be used to adjust location of the piston assembly in the elongated cavity, to reduce tendency of the diaphragm to contact or extrude through the communication port, and/or to reduce potential for damage to the diaphragm in such a situation.

In some embodiments, the charge plate is curved, for example to form a domed or partially hemispherical shape. This curved shape may be configured to correspond to a shape of the diaphragm when it is deformed due to pressure of the charged gas of the energy storage and return portion, when the working fluid system is in a predetermined OFF state. The charge plate may be shaped to match the natural diaphragm state attained when the working fluid system is in the OFF state, thereby spreading contact force between diaphragm and charge plate over a substantial portion, for example substantially all of, the diaphragm. A shaped charge plate may thereby accommodate the diaphragm in contact therewith.

In embodiments of the present invention, the accumulator is configured, for example by compressible gas pre-charge levels, so that the diaphragm is spaced apart from the charge plate by at least a predetermined distance when the working fluid exerts pressures corresponding to operating pressures. That is, as the system working pressure rises above a predetermined minimal level the piston is translated away from the communication port, thereby compressing the pre-loading gas volume and removing the diaphragm from the region of contact with the charge plate. From this operating position the diaphragm may displace dynamically or under cyclic loading and will not impact on the surface. However, as the system working pressure falls, for example during shut down and non-operational situations, the diaphragm may make resting contact with and reside against the charge plate. In some embodiments, an orderly shut-down procedure, spring mechanisms, valve mechanisms, or the like may be used to ensure that the diaphragm comes into contact with the charge plate sufficiently gently so as to inhibit damage to the diaphragm. Other methods of preventing diaphragm extrusion or impact damage may also be used, such as combining an anti-extrusion disc in the diaphragm or similar style backing plates of different geometries.

In some embodiments, the accumulator apparatus of the present invention may be adapted for use in systems where an accumulator can provide benefit, such as noise suppression systems; system efficiency control and enhancement; energy storage and return systems, and diaphragm clamping systems. The present invention may further provide for an accumulator which is substantially free of components that can break free being hazardous to system components.

Embodiments of the present invention may be applied to a device or system that would benefit from the reduction of pressure fluctuations in a working fluid system thereof. In particular, embodiments of the present invention may be used with, but are not limited to, working fluid systems which operate over a large pressure range and at high frequencies. Embodiments of the present invention may be used to replace other conventional accumulators and may provide for a substantially reliable, durable and fail safe design.

In one embodiment, the method as described herein further comprises configuring the ring portion to slidingly engage said inner walls via a bushing.

The invention will now be described with reference to specific examples. It will be understood that the following examples are intended to describe embodiments of the invention and are not intended to limit the invention in any way.

### EXAMPLES

### EXAMPLE 1:

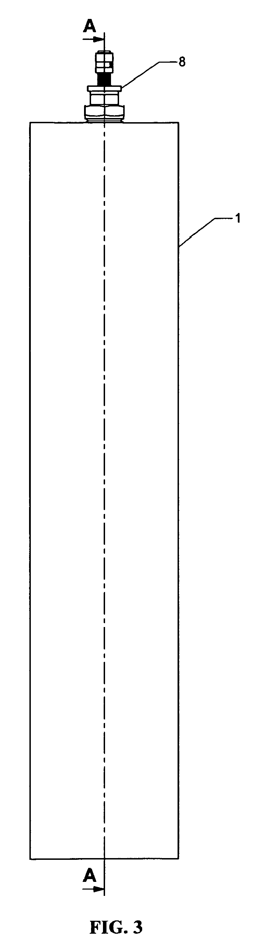

Now referring to Figs. 3 to 6, an accumulator in accordance with an exemplary embodiment of the present invention will be described with relevant components and possible alternative components. Fig. 3 shows an external view of the accumulator comprising a cylindrical pressure vessel. The shape and dimensions of the pressure vessel may be adjusted depending on desired operational characteristics of the accumulator. The elongated, cylindrical shape facilitates travel of the piston assembly in an elongated cavity of the pressure vessel, in order to tend to equalize pressures between first and second portions of the elongated cavity separated by the piston assembly. The pressure vessel comprises a honed cylinder 1 of material capable of withstanding the pressures required. In some embodiments, the pressure vessel comprises steel honed seamless mechanical tubing. This material is readily available in a variety of situations and may simplify the design without the need for a custom shaped pressure vessel.

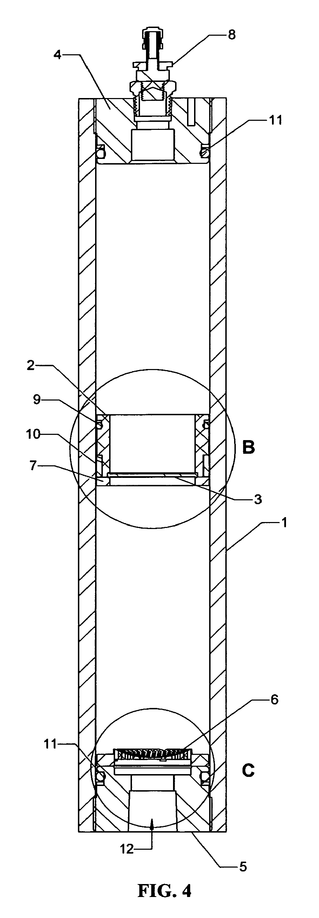

Fig. 4 illustrates a cross-section of the accumulator of Fig. 3. Fig. 4 illustrates threaded end caps 4 and 5 on opposite ends of the cylinder 1, configured for screwing into or onto ends of the cylinder 1 in a sealing arrangement. On a gas chamber end of the accumulator, there is provided a threaded end cap 4, fitted with a charging port 8. The threaded end cap 4 provides for assembly and disassembly of the device and the charging port 8 provides for pre-charging, confirming the charge, and/or re-charging a sealed volume of gas held in a second portion of the accumulator elongated cavity, and associated with an energy storage and return system. Charging of gas may be performed to provide for a predetermined or configurable amount of compressible gas within the accumulator, the amount configurable depending at least in part on anticipated operating conditions.

On a fluid side of the accumulator there is provided a threaded end cap 5, which is configured to include a communication port 12 for operative coupling with a working fluid system, such as a hydraulic system. In the shown embodiment this communication port 12 is an aperture which has threaded sidewalls for fitting to a corresponding male threaded stud. The stud may be positioned to communicate with the working fluid system at a point selected for facilitating efficient and effective suppression of pressure fluctuations. Communication between the accumulator cavity with the working fluid system may be provided by a variety of different approaches, at a variety of different locations of the working fluid system. In some embodiments, a consideration is to provide for a sufficiently large communication port 12 to maintain sufficiently high rates of fluid flow, with sufficiently low impedance, between the accumulator and the working fluid system. Each end cap 4, 5 includes a means for sealing the medium inside from escaping out of the pressure vessel. This sealing means is shown as an o-ring seal 11, as would be readily understood by a worker skilled in the art, but can be of other types which are sufficient given the anticipated pressure conditions. Thread seal tape may be applied to the threaded end caps for facilitating sealing of the pressure vessel. Alternatively, one or more of the threaded end caps 4, 5 may be replaced with welded caps or clamped-on or otherwise attached caps, or the end caps 4, 5 may be included as one piece, that is integrally formed, with the cylinder.

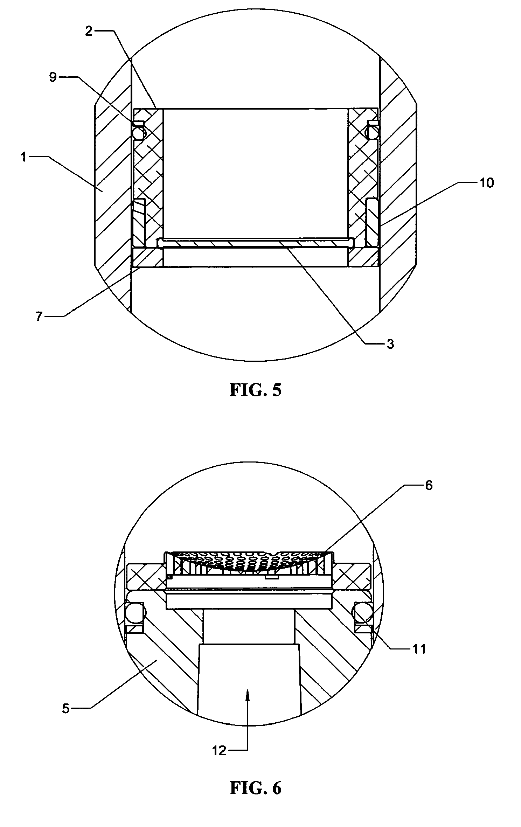

Fig. 5 is a detailed view taken from detail B of Fig. 4, showing the flexible piston assembly including the massive piston shell and deflectable inserted membrane, in accordance with embodiments of the invention. Fig. 5 also illustrates trapping of the diaphragm and the sealing system used to separate fluid from gas and allow for concentric travel of the piston. The piston assembly shown in Fig. 5 comprises a ring portion 2, a diaphragm 3, and a diaphragm clamping mechanism 7. The piston assembly comprises a relatively massive ring portion 2 in relation to a deflectable, lightweight diaphragm 3. In some embodiments the ring portion 2 is a substantially cylindrical shell that contains two grooves on its outer diameter. One groove of the ring portion 2 is configured to receive a seal 9, such as an o-ring seal, to separate the two chambers of the cylinder. The seal 9 can be of a predetermined material and shape to appropriately separate the gas volume from the fluid and allow for adequately low-friction travel between the cylinder 1 and the piston assembly, or travel with a predetermined amount of friction. The seal 9 may be sized so that a predetermined amount of pressure is exerted at points where it contacts the ring portion 2 and the cylinder 1, thereby facilitating a seal while allowing for travel of the piston assembly. Another groove of the ring portion 2 is configured to receive a sliding bearing component such as a bushing or bush-style bearing component 10. The bushing 10 may be of a variety of materials and styles. A primary purpose of the bushing 10 is to provide a guided surface to maintain concentricity and low friction for travel of the piston assembly in the cylinder. The bushing 10 may thus be of adequate height so as to resist being knocked off-axis, thereby inhibiting jamming of the piston assembly in the cylinder. Use of such a bushing 10 may thus render it unnecessary to add further piston stabilizing features, such as a stabilizing and guided rod. This may simplify the accumulator design and remove tortuous components internal to the cavity which might otherwise contact, interfere with, and ultimately contribute to failure to the diaphragm.

The diaphragm 3 in the present embodiment may comprise an elastic material that offers a resiliency to the mediums to which it will be exposed, as well as adequate strength properties to maintain the level of deflection required and experience strain while experiencing low stress. The diaphragm material may be configured to stretchably deform while developing tensile forces therein in accordance with a predetermined deformation profile. The diaphragm 3 may be elastically deformable from a taut or slack base state, or it may be inelastic and mounted with a predetermined amount of slack. As the tensile forces build, the diaphragm may exhibit increased resistance to further stretchable and/or elastic deformation. The material may be elastic or inelastic, with a predetermined amount of resistance to pressure differentials, as long as a predetermined amount of deflection is achievable and the material stress and strain levels are maintained substantially below fatigue level.

The diaphragm is operatively coupled to the ring portion by an appropriate method, for example by clamping, integrally forming the diaphragm and ring portion, adhesively cementing the diaphragm and ring portion, or the like. Fig. 5 illustrates the diaphragm 3 operatively coupled to the ring portion 2 via a clamp plate 7. The clamp plate 7 is a ring which is bolted to the piston assembly ring portion, with the diaphragm captured between the clamp plate and the ring portion, thereby compressing the diaphragm and clamping it in place. A similar effect can be achieved using other clamping mechanisms known in the art and suitable to compress the diaphragm or a different method of attachment such as a vulcanized ring on the diaphragm which can be pressed into the piston. In some embodiments, the diaphragm has an enlarged outer lip which can be compressed for insertion into a corresponding ring-shaped cavity of the ring portion. The ring-shaped cavity may have a surface portion and an interior portion, the interior portion having a larger width than the surface portion, so that the outer lip of the diaphragm can rest within the interior portion and be held therein by the limited width of the surface portion. The diaphragm should be operatively coupled to the piston assembly ring portion in a secure manner, so that the diaphragm is engaged with the ring portion substantially along its entire perimeter. Piston and press ring geometry may be configured to facilitate entrapment of the diaphragm while reducing stress within the strained region of the diaphragm.

Fig. 6 is a detailed view taken from detail C of Fig. 4, showing a charge plate and communication port with the hydraulic system, in accordance with embodiments of the invention. Fig. 6 illustrates a charge plate 6, provided in accordance with embodiments of the present invention. The charge plate 6 is a perforated plate optimized in geometry, hole diameter and hole number to allow working fluid to flow therethrough with an adequately low amount of restriction so as not to substantially impede operation of the accumulator. The charge plate 6 is further configured to maintain at least a predetermined strength to support the diaphragm when working fluid pressure drops to a predetermined low level, for example corresponding to an OFF state of the machinery. The surface of the charge plate is configured such that when contacted in an anticipated manner by the diaphragm, little or no damage will be sustained to the diaphragm.

### EXAMPLE 2:

In an exemplary application, an accumulator in accordance with an embodiment of the present invention is installed into a device that requires the suppression of pressure fluctuations over a wide pressure range and at high frequencies. Specifically it may be operatively coupled to a working fluid system of one or more items of resonant vibratory equipment such as pile drivers, drills, and compactors which operate both off and on resonance and therefore operate under varying pressure conditions.

The accumulator may be installed in a substantially vertical position, and operatively coupled to a working fluid system on the pressure side of the flow of working fluid. The accumulator may be installed close to the main inlet or outlet of working fluid and in direct communication with the fluid flow. In some embodiments, the less tortuous the fluid path communicating the accumulator to the flow, the more effective the accumulator will be. This accumulator may comprise an external cylindrical pressure vessel that may be easily installed with a communication port, or the accumulator may be incorporated directly into a machine. For example, a cylindrical cavity may be bored directly into the manifold of a machine into which the piston assembly is then directly inserted. The accumulator also may or may not be supported further in the vertical and/or horizontal direction depending on the environment in which it is situated.

When installed into a resonant vibratory system or machine, an accumulator in accordance with embodiments of the present invention may effectively reduce the pressure fluctuations to an acceptable level where little or no wear or damage is caused to the machine due to the undesirable effects such as the water hammer effect. In some embodiments, the accumulator may be installable with substantial ease and may be relatively simple to inspect and maintain. For example, the accumulator may be configured for easy disassembly to inspect internal components. In some embodiments, the accumulator may be disassembled, assembled and maintained with few or no special tools or specialized skills.

It is obvious that the foregoing embodiments of the invention are examples and can be varied in many ways. Such present or future variations are not to be regarded as a departure from the spirit and scope of the invention, and all such modifications as would be obvious to one skilled in the art are intended to be included within the scope of the following claims.

## Claims

1. An accumulator apparatus (100) comprising:
a) a pressure vessel having inner walls defining an elongated cavity, the pressure vessel comprising a communication port (122) in fluid communication with a first portion (120) of the elongated cavity, the pressure vessel further comprising an energy storage and return portion associated with a second portion (115) of the elongated cavity; and
b) a piston assembly (104) located within the elongated cavity and configured to separate the elongated cavity into the first portion and the second portion, **characterized in that** the piston assembly comprises:
a diaphragm (108); and
a ring portion (106) operatively coupled to the diaphragm at an outer periphery of the diaphragm, the ring portion movably and sealingly engaged with said inner walls;
wherein the diaphragm is configured to deform under a pressure differential between the cavity first portion and the cavity second portion, thereby developing a tensile force within the diaphragm, the outer periphery of the diaphragm configured to transfer a force (125, 135) representative of the tensile force into the ring portion, the ring portion configured to move within the elongated cavity at least in part in response to said force.

2. The accumulator apparatus according to claim 1, wherein the diaphragm is configured for one or both of elastic deformation and inelastic deformation under said pressure differential.

3. The accumulator apparatus according to any one of claims 1 and 2, the apparatus further comprising a charge plate (6) located adjacent to the communication port, the charge plate configured to separate the diaphragm from the communication port.

4. The accumulator apparatus according to claim 3, wherein the charge plate is shaped to accommodate the diaphragm when in contact therewith.

5. The accumulator apparatus according to any one of claims 1 to 4, wherein the ring portion comprises a bushing (10) configured to slidingly engage said inner walls.

6. The accumulator apparatus according to any one of claims 1 to 5, wherein the diaphragm is freely movable within the elongated cavity when the piston assembly is at least a predetermined distance from both a first end and a second end of the elongated cavity.

7. The accumulator apparatus according to any one of claims 1 to 6, wherein the diaphragm is configured to deform in response to variation in the pressure differential in a first frequency range, and wherein the ring portion is configured to move within the elongated cavity in response to variation in the pressure differential in a second frequency range lower than the first frequency range.

8. The accumulator apparatus according to any one of claims 1 to 7, wherein, in response to the pressure differential varying periodically at a predetermined frequency, the ring portion is restricted to a predetermined range of motion within the elongated cavity.

9. The accumulator apparatus according to any one of claims 1 to 8, wherein the communication port and the elongated cavity are configured to facilitate a predetermined capacity flow rate.

10. The accumulator apparatus according to any one of claims 1 to 9, wherein the diaphragm is configured with a predetermined deflection profile, based at least in part on one or more factors selected from the group comprising: diaphragm shape, and diaphragm thickness profile.

11. A method for providing an accumulator apparatus (100), the method comprising:
a) providing a pressure vessel having inner walls defining an elongated cavity, the pressure vessel comprising a communication port (122) in fluid communication with a first portion (120) of the elongated cavity, the pressure vessel further comprising an energy storage and return portion associated with a second portion (115) of the elongated cavity; and **characterized in that** the method further comprises:
b) providing a piston assembly (104) comprising:
a diaphragm (108); and
a ring portion (106) operatively coupled to the diaphragm at an outer periphery of the diaphragm, the ring portion movably and
sealingly engaged with said inner walls; and
c) locating the piston assembly located within the elongated cavity, thereby separating the elongated cavity into the first portion and the second portion;
wherein the diaphragm is configured to deform under a pressure differential between the cavity first portion and the cavity second portion, thereby developing a tensile force within the diaphragm, the outer periphery of the diaphragm configured to transfer a force (125, 135) representative of the tensile force into the ring portion, the ring portion configured to move within the elongated cavity at least in part in response to said force.

12. The method according to claim 11, further comprising one or more of:
configuring the diaphragm for one or both of elastic deformation and inelastic deformation under said pressure differential; configuring the diaphragm with a predetermined deflection profile, based at least in part on one or more factors selected from the group comprising: diaphragm shape, and diaphragm thickness profile; and configuring the diaphragm to deform in response to variation in the pressure differential in a first frequency range, and configuring the ring portion to move within the elongated cavity in response to variation in the pressure differential in a second frequency range lower than the first frequency range.

13. The method according to any one of claims 11 and 12, further comprising providing a charge plate (6) located adjacent to the communication port, the charge plate configured to separate the diaphragm from the communication port.

14. The method according to any one of claims 11 to 13, further comprising configuring the accumulator apparatus so that the diaphragm is freely movable within the elongated cavity when the piston assembly is at least a predetermined distance from both a first end and a second end of the elongated cavity.

15. A resonant vibratory system comprising:
a) a working fluid system comprising one or more conduits, the working fluid system configured to contain hydraulic fluid, the working fluid system comprising an accumulator coupling location;
b) a power source operatively coupled to the working fluid system and configured to drive said hydraulic fluid in the working system;
c) a power delivery system operatively coupled to the working fluid system and configured to deliver resonant vibratory power to a load; and
d) the accumulator apparatus according to any one of claims 1 to 10.
